# EUROPEAN PATENT APPLICATION

(11) **EP 2 143 585 A1**
(43) Date of publication of application: **13.01.2010**
(21) Application number: 09163102.8
(22) Date of filing: 18.06.2009
(51) Int. Cl.: B60K 28/06, A61B 5/18, B60W 50/08

(54) **Adaptive Driver Warning Methodology**

(30) Priority: 08.07.2008 US 217653
(71) Applicant: Delphi Technologies, Inc., Troy, Michigan 48007 (US)
(72) Inventor: Smith, Matthew R., Westfield, IN 46074 (US)
(74) Representative: Denton, Michael John

(57) **Abstract**

An adaptive driver warning methodology takes into account the driver gaze during a steady-state interval following a precipitating event that will potentially lead to the issuance of a driver warning. The elapsed steady-state time following the precipitating event is compared with the duration of continuous non-forward driver gaze following the precipitating event (38). If the duration of continuous non-forward driver gaze is less than the elapsed steady-state time, the warning parameters are established in a manner to de-sensitize or de-emphasize the driver warning (42). As a result, the driver warning is de-sensitized or deemphasized even though the driver temporarily glances away from the forward direction during the steady-state interval following the precipitating event.

## Description

### TECHNICAL FIELD

The present invention relates to the issuance of warnings that alert a driver to a potentially hazardous driving situation, and more particularly to an adaptive warning issuance methodology that minimizes nuisance warnings.

### BACKGROUND OF THE INVENTION

Since many vehicle accidents occur due to driver inattention and distraction, an increasing number of vehicles are being equipped with sensor systems for detecting objects that pose a potential hazard and various driver warning mechanisms for alerting the driver. For example, a forward collision warning can be issued if the closing distance between the host vehicle and a detected object in the forward path exceeds a threshold; and a lane departure warning can be issued if an overtaking vehicle is detected in a lane adjacent to the host vehicle. Driver warnings can also be issued when a maneuver characteristic of driver inattention or distraction is detected, such as when the host vehicle gradually drifts into an adjacent lane.

Unfortunately the above-mentioned warnings are often unnecessary, and can annoy an alert driver who, for example, already sees the object in the forward path, has no intention of changing lanes, or intends to change lanes gradually. For this reason, the U.S. Patent No. 6,859,144 to Newman et al., incorporated by reference herein, discloses driver warning methodology in which the eye gaze direction of the driver is also taken into account. When a potentially hazardous driving condition is detected, Newman et al. consider the driver eye gaze. Different actions are taken depending on whether the driver eye gaze indicates a high or low probability of driver desire that a warning be given. For example, an eye gaze toward a side mirror indicates that the driver intends to change lanes, and a forward eye gaze indicates that the driver is aware of objects in the forward path. However, the driver eye gaze can vary from moment to moment, and gaze direction at the moment that a potentially hazardous driving condition is detected may not provide a reliable indication of driver attention or inattention. Therefore, what is needed is an adaptive driver warning methodology that more effectively infers driver state and issues driver warnings accordingly.

### SUMMARY OF THE INVENTION

The present invention is directed to an adaptive driver warning methodology in which the warning action taken depends on the driver gaze during a steady-state interval following a precipitating event that will potentially lead to the issuance of a driver warning. The elapsed steady-state time following the precipitating event is compared with the duration of continuous non-forward driver gaze following the precipitating event. If the duration of continuous non-forward driver gaze is less than the elapsed steady-state time, the driver is considered to be aware of the event, and the warning parameters are established in a manner to de-sensitize or de-emphasize the driver warning. As a result, one or more momentary driver glances away from the forward direction during the steady-state interval will result in a de-sensitized or de-emphasized driver warning when a warning criterion is satisfied. On the other hand, the warning parameters are established in a manner to sensitize or emphasize the driver warning if the duration of continuous non-forward driver gaze is at least as great as the elapsed steady-state time.

### BRIEF DESCRIPTION OF THE DRAWINGS

FIG. 1 is a block diagram of a driver warning system for a vehicle, including a microprocessor-based adaptive warning controller for carrying out the method of this invention.

FIG. 2 is a timing diagram depicting forward object range, an alert threshold, and driver gaze for two different driving scenarios.

FIG. 3 is a flow chart representative of a software routine executed by the adaptive warning controller of FIG. 1 for carrying out the method of this invention.

### DESCRIPTION OF THE PREFERRED EMBODIMENT

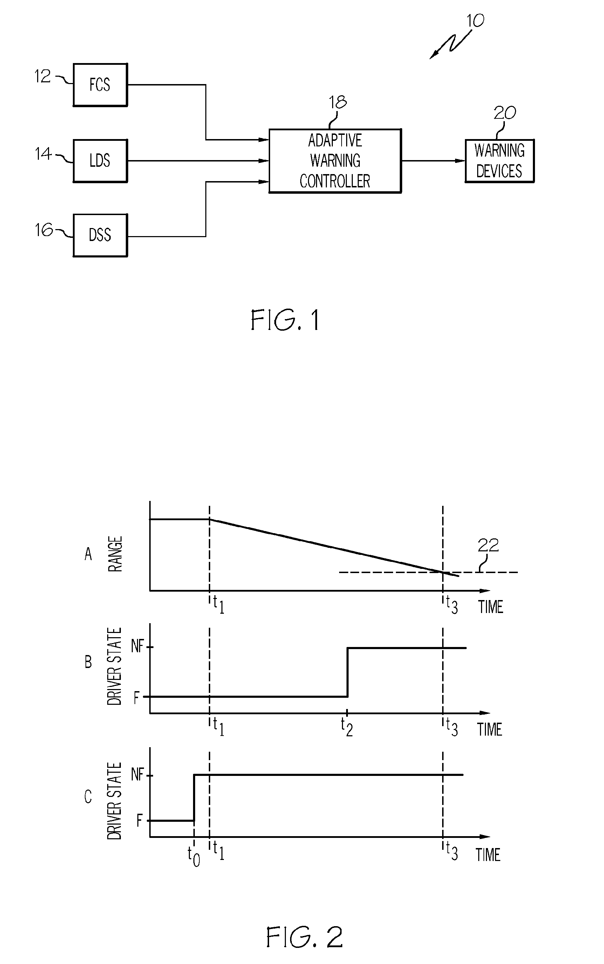

Referring to the FIG. 1, the reference numeral 10 generally designates a driver warning system for a host vehicle, including a forward collision sensor (FCS) 12, a lane departure sensor (LDS) 14, a driver state sensor (DSS) 16, an adaptive warning controller 18, and one or more warning devices 20. The forward collision sensor 12 typically includes radar object detection sensors configured to detect objects forward of the host vehicle, and to supply corresponding azimuth and range data (and possibly object classification data) to adaptive warning controller 18. The lane departure sensor 14 typically includes video imaging sensors and signal processing circuits for identifying lane markings and the position of the host vehicle relative to the lane markings. The driver state sensor 16 detects the orientation of the driver's head or eyes to infer the driver eye gaze direction, and may include for example, an infrared illumination source, one or more digital imaging devices, and a signal-processor for analyzing the video data to determine or characterize the driver's eye gaze direction. For purposes of the illustrated embodiment, it is assumed that driver state sensor 16 supplies a simple binary output to adaptive warning controller 18 indicating whether the driver eye gaze is forward or non-forward. The adaptive warning controller 18 is a microprocessor-based controller that carries out the adaptive warning methodology of the present invention in response to the information provided by sensors 12, 14 and 16 for determining whether, and in what manner, the warning devices 20 should be activated to alert the driver to a potentially hazardous driving situation. The warning devices 20 may take many different forms for producing audible, visible, vibrational or motional effects, and the intensity of the produced effects can preferably be controlled to emphasize or de-emphasize the warning.

In general, driver warning systems monitor a specified driving situation, and issue a warning when a prescribed alert threshold is violated. For example, the prescribed alert threshold in the case of a forward collision warning could be a calibrated closing distance and/or rate between the host vehicle and a detected object in the forward travel path; and the prescribed alert threshold in the case of a lane departure warning could be a calibrated distance between the host vehicle and an identified lane marker. But the present invention recognizes that for any such alert threshold, there is a related precipitating event that is not hazardous in itself, and that the driver state during the interval between the precipitating event and violation of the alert threshold provides information that is relevant to determining whether and how a driver warning should be issued. For example, the precipitating event for a forward collision warning can be defined as a detected increase in the forward object deceleration, an abrupt change in its range rate, or even the initial detection of a forward object. And the precipitating event for a lane departure warning can be defined as a detected increase in lateral velocity or lateral acceleration of the host vehicle. In any case, the time interval between the precipitating event and an eventual violation of the alert threshold is referred to herein as the steady-state interval.

According to the present invention, the adaptive warning controller 18 keeps track of the elapsed steady-state interval and the duration of continuous non-forward driver gaze during the steady-state interval. The elapsed steady-state time is compared to the continuous non-forward gaze time to infer whether the driver is aware of the subject situation. So long as the non-forward gaze time is less than the elapsed steady-state time, the adaptive warning controller 18 sets the warning parameters in a manner to de-sensitize or de-emphasize the associated driver warning. For example, the warning can be de-sensitized by adaptively adjusting the alert threshold in a direction to delay its violation, or de-emphasized by reducing the intensity of the warning or even disabling the warning. On the other hand, if the non-forward gaze time is at least as great as the elapsed steady-state time, the adaptive warning controller 18 sets the warning parameters in a manner to sensitize or emphasize the associated driver warning. For example, the warning can be sensitized by adaptively adjusting the alert threshold in a direction to hasten its violation, or emphasized by increasing the intensity of the warning.

In view of the above, it will be understood that under the method of the present invention, the driver state at the moment the alert threshold is violated is not determinative, but rather the driver state in the steady-state interval following the precipitating event. Graphs A-C of FIG. 2 illustrate this point in respect to a forward collision warning situation. Graph A depicts the range to a detected object in the forward travel path of the host vehicle, Graph B depicts the indicated driver state for a first driving scenario, and Graph C depicts the indicated driver state for a second driving scenario, all on a common time scale. The precipitating event for the forward collision warning situation occurs at time t₁ when the range to the detected object begins decreasing as shown in Graph A. The broken line 22 in Graph A designates a calibrated alert threshold - that is, a calibrated closing range below which a driver warning will ordinarily be issued - and the alert threshold is violated at time t₃ as also shown in Graph A.

In the scenario depicted by Graph B, the driver's eye gaze changes from forward (F) to non-forward (NF) at time t₂, and is still non-forward when the alert threshold 22 is violated at time t₃. During the entire steady-state interval, the non-forward gaze time is less than the elapsed steady-state time, and the adaptive warning controller 18 sets the warning parameters in a manner to de-sensitize or de-emphasize the forward collision warning that will occur when the threshold 22 is violated. De-sensitizing the forward collision warning can involve lowering the alert threshold 22, for example, so that the alert threshold 22 is violated later than would otherwise occur.

In the scenario depicted by Graph C, the driver's eye gaze changes from forward (F) to non-forward (NF) at time to, prior to the precipitating event, and is remains non-forward. In this case, non-forward gaze time is at least as great as the elapsed steady-state time during the entire steady-state interval, and the adaptive warning controller 18 sets the warning parameters in a manner to sensitize or emphasize the forward collision warning that will occur when the threshold 22 is violated. Sensitizing the forward collision warning can involve raising the alert threshold 22, for example, so that the alert threshold 22 is violated earlier than would otherwise occur.

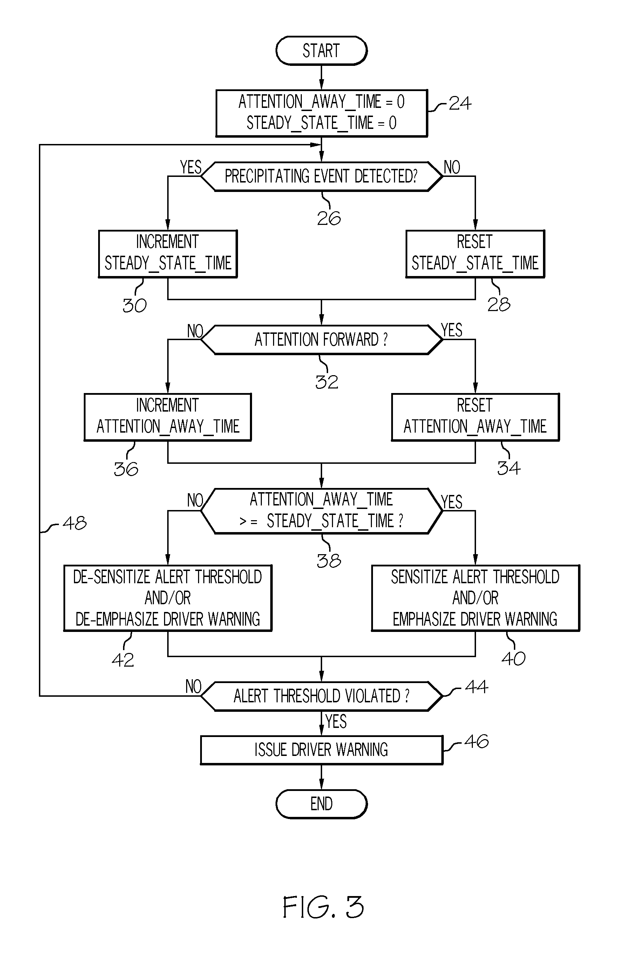

The flow chart of FIG. 3 is representative of a software routine executed by the adaptive warning controller 18 for carrying out the method of this invention. Referring to FIG. 3, the block 24 designates an initialization step executed prior to the detection of a precipitating event. Until such time as a precipitating event is detected, the blocks 26 and 28 are executed to set a steady-state timer value (STEADY_STATE_TIME) to zero. However, once a precipitating event has been detected, the blocks 26 and 30 are periodically executed to increment the steady-state timer value to measure the elapsed time of the ensuing steady-state interval. Whenever the driver state sensor 16 indicates that driver's eye gaze is forward, block 32 and 34 are executed to set an attention-away timer value (ATTENTION_AWAY_TIME) to zero or a predetermined near-zero value. However, blocks 32 and 36 are periodically executed to increment the attention-away timer value so long as driver state sensor 16 indicates that driver's eye gaze is non-forward. In this way, the attention-away timer value provides a measure of the duration of continuous non-forward driver gaze.

Block 38 then compares ATTENTION_AWAY_TIME with STEADY_STATE_TIME. If ATTENTION_AWAY_TIME is equal to or greater than STEADY_STATE_TIME, block 40 is executed to sensitize the alert threshold and/or emphasize the scheduled intensity of the forward collision warning. This is the default condition; it occurs in a scenario such as depicted in Graph C of FIG. 2, and also when no precipitating event is detected. However, if ATTENTION_AWAY_TIME is less than STEADY_STATE_TIME, block 42 is executed to de-sensitize the alert threshold and/or de-emphasize the scheduled intensity of the forward collision warning. This occurs in a scenario such as depicted in Graph B of FIG. 2, in scenarios where the driver's attention is continuously forward, and in scenarios where the driver's attention is temporarily non-forward yet forward when the alert threshold 22 is violated. In any of these later scenarios, the driver's attention is forward (to view the relevant event) for at least a portion of the steady-state interval following the detected precipitating event, so that a driver warning is considered to be unnecessary. It will be seen that resetting ATTENTION_AWAY_TIME to a predetermined near-zero value (instead of zero) biases the decision of block 38 toward an affirmative outcome that sensitizes or emphasizes the forward collision warning. And finally, blocks 44 and 46 issue the forward collision warning if and when the alert threshold is violated. Prior to violation of the alert threshold, blocks 26-44 are periodically reexecuted to update the timer values as indicated by the flow diagram line 48.

In summary, the method of the present invention provides an effective yet easily implemented way of tailoring the issuance of a driver warning to the driver state during the steady-state interval following a precipitating event for the warning so that the warning action more nearly conforms to the desired intent, and nuisance warnings are reduced. While the present invention has been described with respect to the illustrated embodiment, it is recognized that numerous modifications and variations in addition to those mentioned herein will occur to those skilled in the art. For example, the sensor systems depicted in FIG. 1 should not be taken as limiting, the flow chart steps depicted in FIG. 3 could be carried out in a different order, and so forth. Accordingly, it is intended that the invention not be limited to the disclosed embodiment, but that it have the full scope permitted by the language of the following claims.

## Claims

1. A method of warning a driver of a vehicle of a potentially hazardous driving condition, comprising the steps of:
defining an alert threshold (22) for the hazardous driving condition, and issuing a driver warning (20) upon determining that the alert threshold has been violated (44, 46);
detecting a precipitating event (26) that could potentially lead to a violation of the alert threshold (22);
sensing a driver gaze direction (16), and determining when the sensed driver gaze direction is non-forward (32); and
adaptively adjusting a driver warning parameter in a direction to de-emphasize or de-sensitize the driver warning when the driver gaze direction is temporarily non-forward following the detection of the precipitating event but prior to determining that the alert threshold has been violated (24-42).

2. The method of claim 1, where:
the potentially hazardous driving condition is a collision with a detected object in a forward path of the vehicle; and
the precipitating event is a specified change in deceleration or range-rate of the detected object relative to the host vehicle.

3. The method of claim 1, where:
the potentially hazardous driving condition is a collision with a detected object; and
the precipitating event is the detection of the object.

4. The method of claim 1, where:
the potentially hazardous driving condition is a lane change maneuver; and
the precipitating event is a specified change in lateral velocity or lateral acceleration of the host vehicle.

5. The method of claim 1, including the steps of:
measuring an elapsed time of a steady-state interval beginning at the detection of the precipitating event (26-30);
measuring a duration of continuous non-forward driver gaze during said steady-state interval (32-36); and
adaptively adjusting the driver warning parameter based on a comparison of the measured elapsed time and the measured duration of continuous non-forward driver gaze (38-42).

6. The method of claim 5, including the step of:
adaptively adjusting the driver warning parameter in a direction to de-emphasize or de-sensitize the driver warning when the measured duration of continuous non-forward driver gaze is less than the measured elapsed time (38, 42).

7. The method of claim 1, including the step of:
adaptively adjusting the driver warning parameter in a direction to emphasize or sensitize the driver warning when the measured duration of continuous non-forward driver gaze at least as great as the measured elapsed time (38-40).

8. The method of claim 1, including the step of:
increasing the measured duration of continuous non-forward driver gaze by a prescribed amount to favor adaptive adjustment of the driver warning parameter in the direction that emphasizes or sensitizes the driver warning (34).

9. The method of claim 1, where:
the driver warning parameter is the alert threshold (22); and
the step of adaptively adjusting the driver warning parameter (42) includes changing the alert threshold (22) in a direction to delay the violation of the alert threshold (22).

10. The method of claim 1, where:
the driver warning parameter is a warning intensity; and
the step of adaptively adjusting the driver warning parameter (42) includes reducing the warning intensity.
